# EUROPÄISCHE PATENTSCHRIFT

(11) **EP 2 726 304 B1**
(45) Veröffentlichungstag und Bekanntmachung des Hinweises auf die Patenterteilung: **26.04.2017**
(21) Anmeldenummer: 12727626.9
(22) Anmeldetag: 05.06.2012
(51) Int. Cl.: B60C 11/03, B60C 11/11, B60C 11/13

(54) **FAHRZEUGLUFTREIFEN**
PNEUMATIC VEHICLE TIRE
PNEU DE VEHICULE

(30) Priorität: 28.06.2011 DE 102011051387
(43) Veröffentlichungstag der Anmeldung: 07.05.2014
(73) Patentinhaber: Continental Reifen Deutschland GmbH, 30165 Hannover (DE)
(72) Erfinder: KLEFFMANN, Jens, 30453 Hannover (DE); BARTKE, Jörg, 30173 Hannover (DE); POKUTTA-PASKALEVA, Anastassia, 30161 Hannover (DE)
(74) Vertreter: Finger, Karsten
(86) Internationale Anmeldenummer: PCT/EP2012/060550
(87) Internationale Veröffentlichungsnummer: WO 2013/000671

(56) Entgegenhaltungen:
- EP-A2- 0 729 854
- GB-A- 2 018 208
- US-A- 5 240 053
- Continental: "Truck, Bus, Coach & Construction Tires, Retreading, Fleet Service ...... HSL ECO-PLUS, HDL ECO-PLUS, HTR 2. HSR 2, HDL1 Superdrive, HTR/HT 63. HSR 1, ...2, HTR/HT 41. HSR, HDR+, HTR1. HS 41, ..., HTW. HSR/RS 415 N, HD 70, HTC1. LSR1 ...", , 12. August 2009 (2009-08-12), XP002683458, Gefunden im Internet: URL:http://www.conti-online.com/generator/ www/de/en/continental/transport/general/ho me/index_en.html [gefunden am 2012-09-14]

## Beschreibung

Die Erfindung betrifft einen Fahrzeugluftreifen für Nutzfahrzeuge gemäß dem Oberbegriff des Anspruches 1.

Ein Reifen der eingangs genannten Art ist beispielsweise der unter der Bezeichnung HDR+ bekannte Continental-Reifen. Die EP 0 729 854 A2 betrifft einen PKW-Winterreifen, dessen Laufstreifen hinsichtlich Nassgriff-, Traktions- und Bremsverhalten auf Schnee verbessert sein soll. Zu diesem Zweck werden im Laufstreifenmittelbereich befindliche Blockreihen durch Umfangs- und Querrillen voneinander getrennt, die sich jeweils aus einem breiten und einem schmalen Rillenabschnitt zusammensetzen. Die GB 2 018 208 A befasst sich mit einem Laufstreifenprofil für Nutzfahrzeugreifen, welches einen gleichmäßigen Abrieb aufweisen soll. Der Laufstreifen weist im mittleren Bereich Profilblöcke und schulterseitig Profilbänder auf. Sehr breite, zickzackförmig verlaufende Umfangsrillen trennen die mittleren Blockreihen von den schulterseitigen Profilbändern. Entlang der Äquatorlinie verläuft eine schmale, ebenfalls zickzackförmig umlaufende Umfangsnut. Weitere schmale und zickzackförmig verlaufende Umfangsnuten verlaufen in den schulterseitigen Bändern. Der aus der US 5,240,053 A bekannte Reifen besitzt ein Laufstreifenprofil, welches hinsichtlich Fahreigenschaften auf nassen Straßen und Geräuschemission verbessert sein soll. Der Laufstreifen weist schulterseitig jeweils eine Blockreihe und im mittleren Laufstreifenbereich Laufstreifenbänder auf, die mit sacknutartig endenden Quernuten versehen sind. Um einen gleichförmigen Abrieb des Laufstreifens zu erreichen, ist der aus der US 5,535,798 A bekannte Reifen durch vier in Umfangsrichtung umlaufende breite Umfangsrillen in Umfangsrippen gegliedert, wobei in den beiden schulterseitigen Umfangsrippen nahe der Laufstreifenränder jeweils eine weitere schmale und in Umfangsrichtung umlaufende Umfangsrille vorgesehen ist. Die breiten Umfangsrillen sind durch Nutflankenflächen begrenzt, welche mit Vertiefungen versehen sind, die das Negativ dreiseitiger Pyramiden sind, deren Spitzen der Laufstreifenperipherie zugewandt sind.

Um den Rollwiderstand von Fahrzeugluftreifen zu senken, ist bereits eine Vielzahl von Maßnahmen vorgeschlagen worden.
Eine Verbesserung des Rollwiderstandes kann oftmals negative Auswirkungen auf andere wichtige Eigenschaften des Reifens haben, beispielsweise auf die Nassgriffeigenschaften des Reifens. Die Nassgriffeigenschaften betreffen im Wesentlichen die Eigenschaften beim Bremsen auf einem nassen Fahrbahnuntergrund.

Der Erfindung liegt die Aufgabe zu Grunde, bei einem Fahrzeugluftreifen der eingangs genannten Art den Laufstreifen derart auszuführen, dass bei gutem Rollwiderstands-Eigenschaften gleichzeitig die Nassgriffeigenschaften verbessert werden.

Gelöst wird die Aufgabe gemäß den kennzeichnenden Merkmalen von Anspruch 1 dadurch, dass
der Tiefenabstand zwischen der Tiefe der Querrillen in den mittleren Profilrippen und der Tiefe der inneren Umfangsrillen maximal 2 mm beträgt,
und dass das Rillenvolumen der Gesamtheit von Umfangsrillen, Schulterrillen und Querrillen im Laufstreifen zwischen 1% und 10% des Bruttovolumens des Laufstreifens beträgt,
wobei das Bruttovolumen des Laufstreifens sich auf die tiefste Rille im Laufstreifen (1) bezieht.

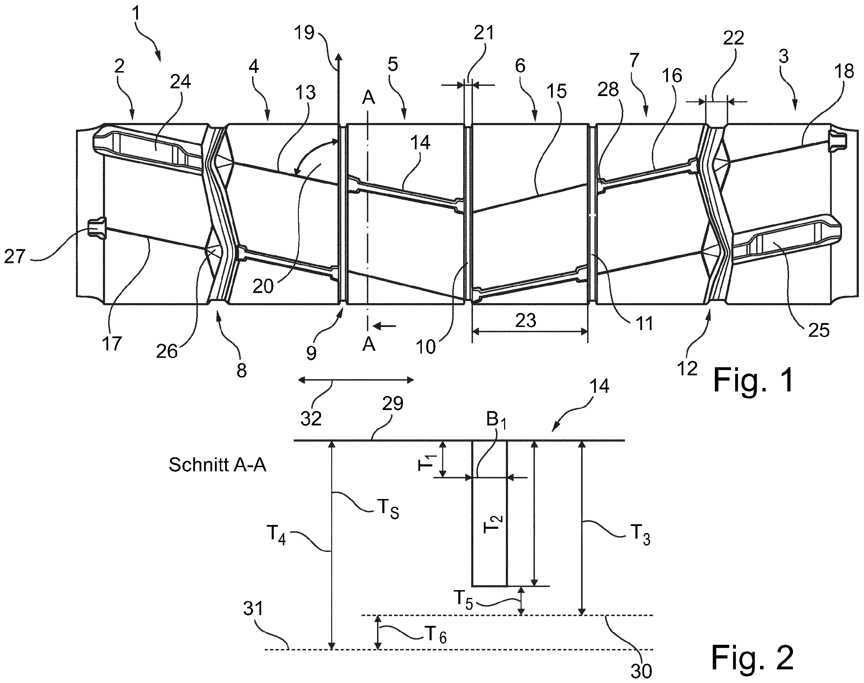

Ein Vorteil des erfindungsgemäßen Fahrzeugreifens besteht darin, dass der Fahrzeugreifen durch eine Profiloptimierung sehr gute Nassgriffeigenschaften aufweist, wobei gleichzeitig die Rollwiderstandseigenschaften ebenfalls auf einem sehr hohen Niveau gehalten werden. Das optimierte und verbesserte Reifenprofil konnte durch eine Vielzahl von Versuchen nachgewiesen werden. Die erfindungsgemäße erhöhte Profilierung des Reifenprofils durch die hohe Anzahl an Querrillen mit den oben genannten Abmessungen hat im Wesentlichen zu besseren Nassgriffeigenschaften geführt, wobei gleichzeitig der Rollwiderstand ebenfalls auf einem hohen Niveau gehalten wird. Bei herkömmlichen Profiloptimierungen führte hingegen eine höhere Profilierung im Regelfall zu einer deutlichen Verschlechterung des Rollwiderstandes. Der Reifen besitz ferner über seine gesamte übliche Einsatzdauer eine hohe Anfahr- und Bremstraktion. Ein Ausführungsbeispiel zeigt die Figur 2, die den Tiefenabstand T5 zwischen der Tiefe der Querrillen T2 und der Tiefe der inneren Umfangsrillen T3anzeigt.

In einer weiteren vorteilhaften Weiterbildung der Erfindung ist vorgesehen, dass der Tiefenabstand zwischen der Tiefe der inneren Umfangsrillen und der Tiefe der Schulterrillen maximal 2 mm beträgt.
Dadurch besitzt der Fahrzeugreifen über die gesamte übliche Einsatzdauer besonders gute Nassgriffeigenschaften.
Ein Ausführungsbeispiel zeigt die Figur 2, die den Tiefenabstand T6 zwischen der Tiefe der inneren Umfangsrillen T3 und der Tiefe T4 der Schulterrillen anzeigt.

In einer weiteren vorteilhaften Weiterbildung der Erfindung ist vorgesehen, dass die Tiefe der Querrillen in den mittleren Profilrippen 11 bis 14 mm beträgt.
Durch diese Tiefabmessung bleiben die genannten Eigenschaften über die gesamte übliche Einsatzdauer des Fahrzeugreifens erhalten.

In einer weiteren vorteilhaften Weiterbildung der Erfindung ist vorgesehen, dass die Tiefe der inneren Umfangsrillen 9 bis 14 mm und/oder die Tiefe der Schulterrillen 9 bis 14 mm beträgt.

In einer weiteren vorteilhaften Weiterbildung der Erfindung ist vorgesehen, dass die Erstreckungslänge der Querrillen in den mittleren Profilrippen bezogen auf die gesamte Breite der mittleren Profilrippe mindestens 80 % beträgt.
Dadurch wird eine gute Anfahr- und Bremstraktion für den Fahrzeugreifen gewährleistet.

In einer weiteren vorteilhaften Weiterbildung der Erfindung ist vorgesehen, dass die Querrillen in den mittleren Profilrippen pfeilförmig angeordnet sind, wobei die Pfeilspitze durch die mittlere innere Umfangsrille gebildet wird.
Durch diese Anordnung werden besonders gute Nasshandling-Eigenschaften des Fahrzeugreifens erreicht.

In einer weiteren vorteilhaften Weiterbildung der Erfindung ist vorgesehen, dass in den Schulterrippen weitere Querrillen angeordnet sind.
Die Querrillen in den Schulterrippen erhöhen die Anfahr- und Bremstraktionen des Fahrzeugreifens.

In einer weiteren vorteilhaften Weiterbildung der Erfindung ist vorgesehen, dass die Breite der mittleren Profilrippen in einem Bereich von 25 bis 55 mm, vorzugsweise in einem Bereich zwischen 35 und 45 mm, liegt.

Anhand eines Ausführungsbeispiels soll die Erfindung erläutert werden. Es zeigen:
- Fig. 1:: eine Aufsicht auf das erfindungsgemäße Reifenprofil,
- Fig. 2:: eine Schnittansicht durch das Reifenprofil in der Fig. 1.

Die Fig. 1 zeigt den Laufstreifen 1 des erfindungsgemäßen Fahrzeugluftreifens für Nutzfahrzeuge.
mittleren Profilrippen 4 bis 7. Die Profilrippen stellen das Profilpositiv des Reifenprofils dar. Die genannten Profilrippen werden durch die beiden Schulterrillen 8 und 12 sowie die inneren Umfangsrillen 9 bis 11 in Umfangsrichtung 19 getrennt.

In radialer Richtung 32 des Laufstreifen 1 erfolgt eine Teilung der Rippen durch die Querrillen 13 bis 16 in den mittleren Profilrippen sowie durch die Querrillen 17 und 18 in den Schulterrippen 2 und 3. Die Querrillen 13 bis 16 können unterschiedliche Breiten aufweisen. Bei diesem Ausführungsbeispiel besitzen die Querrillen 13 und 15 eine Breite von ca. 0,5mm. Die Querrillen 14 und 16 haben hingegen eine Breite von ca. 1,5 mm. Die Querrillen 13 bis 16 erstrecken sich in den mittleren Profilrippen 4 bis 7 über deren gesamte Breite. Der Winkel 20 zwischen der Umfangsrichtung 19 und der Ausrichtung der Querrille 13 und 14 liegt in einem Bereich von kleiner als 60°. Außerdem sind die Querrillen 13 und 14 sowie die Querrillen 15 und 16 pfeilförmig angeordnet, wobei die Pfeilspitze durch die innere Umfangsrille 10 gebildet wird. Die Schulterrippen 2 und 3 weisen bei diesem Ausführungsbeispiel ebenfalls Querrillen 17, 18, 24 und 25 auf. Die Querrillen 24 und 25 sind breiter als die Querrillen 17 und 18. An den Schulterrippen 2 und 3 können seitlich Aussparungen 27 angeordnet sein, die mit der Querrille 17 in Verbindung steht. In den mittleren Profilrippen 4 bis 7 beträgt die Anzahl der Querrillen 13, 14,15 und 16 über den gesamten Reifenumfang jeweils mindestens 120. Durch diese hohe Anzahl von Querrillen werden sehr gute Nassgriffeigenschaften erzielt. Die inneren Umfangsrillen 9, 10 und 11 weisen eine Breite 21 auf, die in einem Bereich von 1mm bis 4mm liegt. Die Breite 22 der Schulterrillen 8 und 12 liegt in einem Bereich von 1mm bis 15mm. Die Breite 23 der inneren Profilrippen 4, 5, 6 und 7 beträgt zwischen 25mm bis 55mm. An der Profilblockoberfläche sind in einigen Teilen des Profiles Phasen 26 angeordnet, die in die Schulterrillen 8 und 12 hineinreichen. Das Rillenvolumen ergibt sich aus der Gesamtheit von Umfangsrillen, Schulterrillen und Querrillen im Laufstreifen 1. Das Rillenvolumen gibt das Volumen des Profilnegativs wieder. Das entsprechende Bruttovolumen des Laufstreifens bezieht sich auf die tiefste Rille im Laufstreifen 1. An der tiefsten Stelle im Reifenprofil wird eine imaginäre Linie in horizontaler Richtung gezogen, wobei durch den oberen Teil des Laufstreifen das Bruttovolumen gebildet wird. Bei dem Ausführungsbeispiel in Fig. 1 weisen die Schulterrillen 8 und 12 einen zickzackförmigen Verlauf auf. Durch diesen zickzackförmigen Verlauf werden die Nassgriffeigenschaften optimiert. Die Schulterrillen 8 und 12 können ebenfalls vollkommen gerade verlaufen wie die inneren Umfangsrillen 9 bis 11.

Die Fig. 2 zeigt eine Schnittansicht A-A durch das Reifenprofil in der Fig. 1. Mit dieser Ansicht wird im Wesentlichen die Tiefe der Querrille 14 dargestellt. Die Tiefe T2 der Querrille beträgt vorzugsweise 11mm bis 14mm. Die Breite B1 der Querrille beträgt maximal 1,5mm, wobei diese Breite in einer Tiefe T1 von 3,5mm gemessen wird. Die Tiefenabmessungen beziehen sich jeweils auf die Profiloberfläche 29. Die Tiefe T3 der inneren Umfangsrillen beträgt vorzugsweise zwischen 9mm und 14mm. Die Tiefe T4 der Schulterrille beträgt vorzugsweise zwischen 9 und 14mm. Mit der gestrichelten Linie 30 ist das Tiefenniveau der Unterkante der inneren Umfangsrillen dargestellt. Die gestrichelte Linie 31 zeigt das Tiefenniveau der Unterkante der Schulterrillen. Die Tiefe T5 zeigt den maximalen Abstand zwischen der Tiefe T2 der Querrillen und der Tiefe T3 der inneren Umfangsrille. Die Tiefe T5 ist vorzugsweise kleiner als 2mm. Die Tiefe T6 zeigt den maximalen Abstand zwischen der Tiefe der inneren Umfangsrillen und der Tiefe der Schulterrillen. Die Tiefe T6 beträgt maximal 2mm.

Die Tabelle 1 zeigt Versuchsergebnisse, die mit dem erfindungsgemäßen Fahrzeugreifen durchgeführt wurden. In dieser Tabelle sind die Versuchsergebnisse von 5 unterschiedlichen Reifenprofilen dargestellt. Eine überraschende Erkenntnis der Versuchsergebnisse ist, dass bei den Versuchsreifen E3 eine relativ hohe Anzahl von Querrillen vorgesehen sind, die zu keiner Verschlechterung des Rollwiderstandes führen. Bei dem Versuchsreifen E3 liegt die Anzahl der Querrillen bei 140, die gleichmäßig über den Umfang der mittleren Profilrippen verteilt sind. Gleichzeitig wurden die Werte für Nasshaftung beim Bremsen und Anfahren um ca. 5% erhöht. Der Wert für den Rollwiderstand ist mit den Buchstaben RR abgekürzt und liegt bei allen Referenzreifen bei etwa 100%. Die Werte für die Nasshaftung beim Bremsen und Anfahren sind in der letzten Zeile wiedergegeben.

Die überraschende Erkenntnis ist, dass das Hinzufügen von Querrillen in den mittleren Profilrippen zu keiner Verschlechterung des Rollwiderstandes führt, wenn die inneren Umfangrillen, die zum Einsatz kommen eine Breite von 3,5 mm und die Querrillen eine maximale Breite von 1,5 mm aufweisen. Diese Erkenntnis wird durch die Versuchsergebnisse der Tabelle 1 belegt. Es ist deshalb überraschend, da in vorherigen Versuchsreihen, mit Reifen mit breiteren Innenrillen, das Hinzufügen von Querrillen in den Mittelrippen zu einer deutlichen Verschlechterung des Rollwiderstands geführt hat, wie die Versuchsergebnisse der Tabelle 5 zeigen. Außerdem überraschend ist, dass basierend auf einem Reifen mit 4 Umfangsrillen mit schmalen Innenrillen das Hinzufügen einer fünften schmalen Umfangsrille zu keiner Verschlechterung des Rollwiderstandes geführt hat, unabhängig davon wie breit die Schulterrillen sind. Das zeigen die Versuchsergebnisse der Tabelle 2. In vorherigen Versuchen hat das Hinzufügen von breiteren Umfangsrillen zur Verschlechterung des Rollwiderstandes geführt, wie durch die Versuchsergebnisse der Tabelle 3 gezeigt wird.

**Tabelle 1**

| | | Referenz 2 | B1 | E1 | E2 | E3 |
|---|---|---|---|---|---|---|
| Umfangs-Schulterrillen | Rillenbreite Rillengrund | 3 mm | 3mm | 3mm | 3mm | 3mm |
| | Rillenbreite 1,5 mm unter Lauffläche | 7,5 mm | 7,5 mm | 7,5 mm | 7,5 mm | 7,5 mm |
| | Anzahl Schulterrillen | 2 | 2 | 2 | 2 | 2 |
| Umfangs-Innenrillen | Rillenbreite Rillengrund | 2 mm | 2 mm | 2 mm | 2 mm | 2 mm |
| | Rillenbreite 1,5 mm unter Lauffläche | 3,5 mm | 3,5 mm | 3,5 mm | 3,5 mm | 3,5 mm |
| | Anzahl Innenrillen | 2 | 3 | 3 | 3 | 3 |
| | Breite Querrillen | 0,5 mm | 0,5 mm | 0,5 mm | 0,5 mm | 0,5 mm |
| | Anzahl Querrillen | 100 | 100 | 40 | 120 | 140 |
| | **RR (Trommelprüfung nach ISO 28580)** | **100%** | **100%** | **100%** | **100%** | **100%** |
| | Naßhaftung Kurvenfahrt (Bewertung erfolgt nach einem standardisierten internen Fahrzeugtest) | 100% | 102% | 102% | 102% | 102% |
| | Naßhaftung Bremsen / Anfahren (Bewertung erfolgt nach einem standardisierten internen Fahrzeugtest) | 100% | 100% | 99% | 102% | 105% |

**Tabelle 2**

| | | Referenz 1 | A1 |
|---|---|---|---|
| Umfangs-Schulterrillen | Rillenbreite Rillengrund | 12 mm | 12 mm |
| | Rillenbreite 1,5 mm unter Lauffläche | 18 mm | 18 mm |
| | Anzahl Schulterrillen | 2 | 2 |
| Umfangs-Innenrillen | Rillenbreite Rillengrund | 2mm | 2 mm |
| | Rillenbreite 1,5 mm unter Lauffläche | 3,5 mm | 3,5 mm |
| | Anzahl Innenrillen | 2 | 3 |
| | Breite Querrillen | 0,5 mm | 0,5 mm |
| | Anzahl Querrillen | 100 | 100 |
| | **RR (Trommelprüfung nach ISO 28580)** | **100%** | **100%** |

**Tabelle 3**

| | | Referenz 1 | F1 |
|---|---|---|---|
| Umfangs-Schulterrillen | Rillenbreite Rillengrund | 12 mm | 12 mm |
| | Rillenbreite 1,5 mm unter Lauffläche | 18 mm | 18 mm |
| | Anzahl Schulterrillen | 2 | 2 |
| Umfangs-Innenrillen | Rillenbreite Rillengrund | 12 mm | 12 mm |
| | Rillenbreite 1,5 mm unter Lauffläche | 18 mm | 18 mm |
| | Anzahl Innenrillen | 2 | 3 |
| | Breite Querrillen | 0,5 mm | 0,5 mm |
| | Anzahl Querrillen | 100 | 100 |
| | **RR(Trommelprüfung nach ISO 28580)** | **100%** | **103%** |

**Tabelle 4**

| | | Referenz 3 | C1 | C2 | C3 | C4 |
|---|---|---|---|---|---|---|
| Umfangs-Schulterrillen | Rillenbreite Rillengrund | 12 mm | 12 mm | 12 mm | 12 mm | 12 mm |
| | Rillenbreite 1,5 mm unter Lauffläche | 18 mm | 18 mm | 18 mm | 18 mm | 18 mm |
| | Anzahl Schulterrillen | 2 | 2 | 2 | 2 | 2 |
| Umfangs-Innenrillen | Rillenbreite Rillengrund | 12 mm | 12 mm | 12 mm | 12 mm | 12 mm |
| | Rillenbreite 1,5 mm unter Lauffläche | 18 mm | 18 mm | 18 mm | 18 mm | 18 mm |
| | Anzahl Innenrillen | 2 | 2 | 2 | 2 | 2 |
| | Breite Querrillen | 0,5 mm | 2mm | 5mm | 8mm | 12 mm |
| | Anzahl Querrillen | 100 | 100 | 100 | 100 | 100 |
| | **RR(Trommelprüfung nach ISO 28580)** | **100%** | **104%** | **109%** | **112%** | **114%** |

**Tabelle 5**

| | **Tabelle 4** | Referenz 4 | D1 | D2 | D3 | D4 |
|---|---|---|---|---|---|---|
| Schulterrillen | Rillenbreite Rillengrund | 12 mm | 12 mm | 12 mm | 12 mm | 12 mm |
| | Rillenbreite 1,5 mm unter Lauffläche | 18 mm | 18 mm | 18 mm | 18 mm | 18 mm |
| | Anzahl Schulterrillen | 2 | 2 | 2 | 2 | 2 |
| Innerillen | Rillenbreite Rillengrund | 12 mm | 12 mm | 12 mm | 12 mm | 12 mm |
| | Rillenbreite 1,5 mm unter Lauffläche | 18 mm | 18 mm | 18 mm | 18 mm | 18 mm |
| | Anzahl Innenrillen | 2 | 2 | 2 | 2 | 2 |
| | Breite Querrillen | 0,5 mm | 0,5 mm | 0,5 mm | 0,5 mm | 0,5 mm |
| | Anzahl Querrillen | 100 | 40 | 50 | 75 | 140 |
| | **RR(Trommelprüfung nach ISO 28580)** | **100%** | **106%** | **105%** | **102%** | **96%** |

### Bezugszeichenliste

- 1: Laufstreifen
- 2: Linke Schulterrippe
- 3: Rechte Schulterrippe
- 4: Mittlere Profilrippe
- 5: Mittlere Profilrippe
- 6: Mittlere Profilrippe
- 7: Mittlere Profilrippe
- 8: Schulterrille
- 9: Innere Umfangsrille
- 10: Mittlere innere Umfangsrille
- 11: Innere Umfangsrille
- 12: Schulterrille
- 13: Querrillen in den mittleren Profilrippen (Breite ca. 0,5 mm)
- 14: Querrillen in den mittleren Profilrippen (Breite ca. 1,5 mm)
- 15: Querrillen in den mittleren Profilrippen (Breite ca. 0,5 mm)
- 16: Querrillen in den mittleren Profilrippen (Breite ca. 1,5 mm)
- 17: Schmale Querrillen in den Schulterrippen
- 18: Schmale Querrillen in den Schulterrippen
- 19: Umfangsrichtung des Reifens
- 20: Winkel zwischen Ausrichtung der Querrille und der Umfangsrichtung
- 21: Breite der inneren Umfangsrillen
- 22: Breite der Schulterrillen
- 23: Breite der inneren Profilrippen
- 24: Breite Querrillen in den Schulterrippen
- 25: Breite Querrillen in den Schulterrippen
- 26: Phasen an der Profilblockoberfläche
- 27: Aussparung an der Schulterrippe
- 28: Aussparung an der Querrille
- 29: Profiloberfläche
- 30: Tiefenniveau der Unterkante der inneren Umfangsrillen
- 31: Tiefenniveau der Unterkante der Schulterrillen
- 32: Radiale Richtung

- B1: Breite der Querrille im Abstand T1 zur Profiloberfläche
- T1: Tiefe ab der die Breite der Querrille gemessen wird
- T2: Tiefe der Querrille
- T3: Tiefe der inneren Umfangsrille
- T4: Tiefe der Schulterrille
- T5: Maximaler Abstand zwischen der Tiefe der Querrille und der Tiefe der inneren Umfangsrille
- T6: Maximaler Abstand zwischen der Tiefe der inneren Umfangsrille und der Tiefe der Schulterrille

## Patentansprüche

1. Fahrzeugluftreifen für Nutzfahrzeuge mit einem Laufstreifen (1), Seitenwänden, mittleren Profilrippen (4,5,6,7), Schulterrippen (2,3), inneren Umfangsrillen (9,10,11) und Schulterrillen (8,12),
wobei die Profilrippen (4,5,6,7), Schulterrippen (2,3), inneren Umfangsrillen (9,10,11) und Schulterrillen (8,12) im Wesentlichen in Umfangsrichtung (19) über den Reifenumfang ausgerichtet und angeordnet sind,
wobei eine Vielzahl an Querrillen (13,14,15,16) in den mittleren Profilrippen (4,5,6,7) angeordnet sind,
wobei die Querrillen (13,14,15,16) in regelmäßigen Abständen zueinander in den mittleren Profilrippen (4,5,6,7) angeordnet sind,
wobei der Laufstreifen (1) zwei Schulterrillen (8,12) und drei innere Umfangsrillen (9,10,11) umfasst,
wobei in den mittleren Profilrippen (4,5,6,7) über den gesamten Reifenumfang jeweils mindestens 120 Querrillen (13,14,15,16) angeordnet sind,
wobei die Breite (B1) der Querrillen (13,14,15,16) in den mittleren Profilrippen (4,5,6,7) in einer Entfernung von 3,5 mm von der Profiloberfläche (29) maximal 1,5 mm beträgt,
wobei die Breite (21) der inneren Umfangsrille (9,10,11) in einer Entfernung von 3,5 mm von der Profiloberfläche jeweils maximal 4 mm beträgt,
und wobei die Querrillen (13,14,15,16) in den mittleren Profilrippen (4,5,6,7) in Bezug auf die Umfangsrichtung (19) in einem Winkel (20) von größer als 60° angeordnet sind.
**dadurch gekennzeichnet, dass**
der Tiefenabstand (T5) zwischen der Tiefe (T2) der Querrillen (13,14,15,16) in den mittleren Profilrippen (4,5,6,7) und der Tiefe (T3) der inneren Umfangsrillen (9,10,11) maximal 2 mm beträgt,
und dass das Rillenvolumen der Gesamtheit von Umfangsrillen (9,10,11), Schulterrillen (11,12) und Querrillen (13-18) im Laufstreifen (1) zwischen 1% und 10% des Bruttovolumens des Laufstreifens (1) beträgt,
wobei das Bruttovolumen des Laufstreifens (1) sich auf die tiefste Rille im Laufstreifen (1) bezieht.

2. Fahrzeugluftreifen nach Anspruch 1,
**dadurch gekennzeichnet, dass**
der Tiefenabstand (T6) zwischen der Tiefe (T3) der inneren Umfangsrillen (9,10,11) und der Tiefe (T4) der Schulterrillen (8,12) maximal 2 mm beträgt.

3. Fahrzeugluftreifen nach einem der vorhergehenden Ansprüche
**dadurch gekennzeichnet, dass**
die Tiefe (T2) der Querrillen (13,14,15,16) in den mittleren Profilrippen (4,5,6,7) 11 bis 14 mm beträgt.

4. Fahrzeugluftreifen nach einem der vorhergehenden Ansprüche
**dadurch gekennzeichnet, dass**
die Tiefe (T3) der inneren Umfangsrillen (9,10,11) 9 bis 14 mm und/oder die Tiefe (T4) der Schulterrillen (8,12) 9 bis 14 mm beträgt.

5. Fahrzeugluftreifen nach einem der vorhergehenden Ansprüche
**dadurch gekennzeichnet, dass**
die Erstreckungslänge der Querrillen (13,14,15,16) in den mittleren Profilrippen (4,5,6,7) bezogen auf die gesamte Breite (23) der mittleren Profilrippe (4,5,6,7) mindestens 80 % beträgt.

6. Fahrzeugluftreifen nach einem der vorhergehenden Ansprüche
**dadurch gekennzeichnet, dass**
die Querrillen (13,14,15,16) in den mittleren Profilrippen (4,5,6,7) pfeilförmig angeordnet sind,
wobei die Pfeilspitze durch die mittlere inneren Umfangsrille (10) gebildet wird.

7. Fahrzeugluftreifen nach einem der vorhergehenden Ansprüche
**dadurch gekennzeichnet, dass**
in den Schulterrippen (2,3) weitere Querrillen (13,14,15,16) angeordnet sind.

8. Fahrzeugluftreifen nach einem der vorhergehenden Ansprüche
**dadurch gekennzeichnet, dass**
die Breite der mittleren Profilrippen (4,5,6,7) in einem Bereich von 25 bis 55 mm, vorzugsweise in einem Bereich zwischen 35 und 45 mm, liegt.

## Claims

1. Pneumatic vehicle tire for commercial vehicles, having a tread (1), side walls, central profile ribs (4, 5, 6, 7), shoulder ribs (2, 3), inner circumferential grooves (9, 10, 11) and shoulder grooves (8, 12),
wherein the profile ribs (4, 5, 6, 7), shoulder ribs (2, 3), inner circumferential grooves (9, 10, 11) and shoulder grooves (8, 12) are aligned and arranged substantially in a circumferential direction (19) over the tire circumference,
wherein a multiplicity of transverse grooves (13, 14, 15, 16) is arranged in the central profile ribs (4, 5, 6, 7),
wherein the transverse grooves (13, 14, 15, 16) are arranged at regular intervals relative to one another in the central profile ribs (4, 5, 6, 7), wherein the tread (1) comprises two shoulder grooves (8, 12) and three inner circumferential grooves (9, 10, 11),
wherein at least 120 transverse grooves (13, 14, 15, 16) are arranged in each of the central profile ribs (4, 5, 6, 7) over the entire circumference of the tire,
wherein the width (B1) of the transverse grooves (13, 14, 15, 16) in the central profile ribs (4, 5, 6, 7) is no more than 1.5 mm at a distance of 3.5 mm from the profile surface (29),
wherein the width (21) of each inner circumferential groove (9, 10, 11) is no more than 4 mm at a distance of 3.5 mm from the profile surface,
and wherein the transverse grooves (13, 14, 15, 16) in the central profile ribs (4, 5, 6, 7) are arranged at an angle (20) greater than 60° in relation to the circumferential direction (19), **characterized in that**
the difference (T5) in depth between the depth (T2) of the transverse grooves (13, 14, 15, 16) in the central profile ribs (4, 5, 6, 7) and the depth (T3) of the inner circumferential grooves (9, 10, 11) is no more than 2 mm,
and **in that** the total groove volume of the circumferential grooves (9, 10, 11), shoulder grooves (11, 12) and transverse grooves (13-18) in the tread (1) is between 1% and 10% of the gross volume of the tread (1),
wherein the gross volume of the tread (1) is based on the deepest groove in the tread (1).

2. Pneumatic vehicle tire according to Claim 1, **characterized in that**
the difference (T6) in depth between the depth (T3) of the inner circumferential grooves (9, 10, 11) and the depth (T4) of the shoulder grooves (8, 12) is no more than 2 mm.

3. Pneumatic vehicle tire according to one of the preceding claims,
**characterized in that**
the depth (T2) of the transverse grooves (13, 14, 15, 16) in the central profile ribs (4, 5, 6, 7) is 11 to 14 mm.

4. Pneumatic vehicle tire according to one of the preceding claims,
**characterized in that**
the depth (T3) of the inner circumferential grooves (9, 10, 11) is 9 to 14 mm and/or the depth (T4) of the shoulder grooves (8, 12) is 9 to 14 mm.

5. Pneumatic vehicle tire according to one of the preceding claims,
**characterized in that**
the length of extent of the transverse grooves (13, 14, 15, 16) in the central profile ribs (4, 5, 6, 7) is at least 80% of the total width (23) of the central profile rib (9, 10, 11).

6. Pneumatic vehicle tire according to one of the preceding claims,
**characterized in that**
the transverse grooves (13, 14, 15, 16) in the central profile ribs (4, 5, 6, 7) are arranged in an arrow shape,
wherein the arrow tip is formed by the central inner circumferential groove (10).

7. Pneumatic vehicle tire according to one of the preceding claims,
**characterized in that**
further transverse grooves (13, 14, 15, 16) are arranged in the shoulder ribs (2, 3).

8. Pneumatic vehicle tire according to one of the preceding claims,
**characterized in that**
the width of the central profile ribs (4, 5, 6, 7) is in a range of from 25 to 55 mm, preferably in a range of between 35 and 45 mm.

## Revendications

1. Pneumatique de véhicule pour des véhicules utilitaires, avec une bande de roulement (1), des parois latérales, des nervures profilées moyennes (4, 5, 6, 7), des nervures d'épaulement (2, 3), des rainures périphériques intérieures (9, 10, 11) et des rainures d'épaulement (8, 12),
dans lequel les nervures profilées (4, 5, 6, 7), les nervures d'épaulement (2, 3), les rainures périphériques intérieures (9, 10, 11) et les rainures d'épaulement (8, 12) sont orientées et disposées essentiellement dans la direction périphérique (19) sur la périphérie du pneu,
dans lequel une multiplicité de rainures transversales (13, 14, 15, 16) sont disposées dans les nervures profilées moyennes (4, 5, 6, 7),
dans lequel les rainures transversales (13, 14, 15, 16) sont disposées à des distances régulières l'une de l'autre dans les nervures profilées moyennes (4, 5, 6, 7),
dans lequel la bande de roulement (1) comprend deux rainures d'épaulement (8, 12) et trois rainures périphériques intérieures (9, 10, 11),
dans lequel respectivement au moins 120 rainures transversales (13, 14, 15, 16) sont disposées dans les nervures profilées moyennes (4, 5, 6, 7) sur toute la périphérie du pneu,
dans lequel la largeur (B1) des rainures transversales (13, 14, 15, 16) dans les nervures profilées moyennes (4, 5, 6, 7) vaut au maximum 1,5 mm à une distance de 3,5 mm de la surface profilée (29),
dans lequel la largeur (21) de la rainure périphérique intérieure (9, 10, 11) vaut respectivement au maximum 4 mm à une distance de 3,5 mm de la surface profilée,
et dans lequel les rainures transversales (13, 14, 15, 16) dans les nervures profilées moyennes (4, 5, 6, 7) sont disposées avec un angle (20) supérieur à 60° par rapport à la direction périphérique (19),
**caractérisé en ce que** la différence de profondeur (T5) entre la profondeur (T2) des rainures transversales (13, 14, 15, 16) dans les nervures profilées moyennes (4, 5, 6, 7) et la profondeur (T3) des rainures périphériques intérieures (9, 10, 11) vaut au maximum 2 mm et **en ce que** le volume de rainure de la totalité des rainures périphériques (9, 10, 11), des rainures d'épaulement (11, 12) et des rainures transversales (13-18) dans la bande de roulement (1) est compris entre 1 % et 10 % du volume apparent de la bande de roulement (1), dans lequel le volume apparent de la bande de roulement (1) se rapporte à la rainure la plus profonde dans la bande de roulement (1).

2. Pneumatique de véhicule selon la revendication 1, **caractérisé en ce que** la différence de profondeur (T6) entre la profondeur (T3) des rainures périphériques intérieures (9, 10, 11) et la profondeur (T4) des rainures d'épaulement (8, 12) vaut au maximum 2 mm.

3. Pneumatique de véhicule selon l'une quelconque des revendications précédentes, **caractérisé en ce que** la profondeur (T2) des rainures transversales (13, 14, 15, 16) dans les nervures profilées moyennes (4, 5, 6, 7) vaut 11 à 14 mm.

4. Pneumatique de véhicule selon l'une quelconque des revendications précédentes, **caractérisé en ce que** la profondeur (T3) des rainures périphériques intérieures (9, 10, 11) vaut 9 à 14 mm et/ou la profondeur (T4) des rainures d'épaulement (8, 12) vaut 9 à 14 mm.

5. Pneumatique de véhicule selon l'une quelconque des revendications précédentes, **caractérisé en ce que** la longueur d'extension des rainures transversales (13, 14, 15, 16) dans les nervures profilées moyennes (4, 5, 6, 7) rapportée à la largeur totale (23) de la nervure profilée moyenne (4, 5, 6, 7) vaut au minimum 80 %.

6. Pneumatique de véhicule selon l'une quelconque des revendications précédentes, **caractérisé en ce que** les rainures transversales (13, 14, 15, 16) dans les nervures profilées moyennes (4, 5, 6, 7) sont disposées en forme de flèche, dans lequel la pointe de flèche est formée par la rainure périphérique moyenne intérieure (10).

7. Pneumatique de véhicule selon l'une quelconque des revendications précédentes, **caractérisé en ce que** d'autres rainures transversales (13, 14, 15, 16) sont disposées dans les nervures d'épaulement (2, 3).

8. Pneumatique de véhicule selon l'une quelconque des revendications précédentes, **caractérisé en ce que** la largeur des nervures profilées moyennes (4, 5, 6, 7) se situe dans une plage de 25 à 55 mm, de préférence dans une plage comprise entre 35 et 45 mm.
